# FASCICULE DE BREVET EUROPEEN

(11) **EP 0 803 382 B1**
(45) Date de publication et mention de la délivrance du brevet: **25.07.2001**
(21) Numéro de dépôt: 97490010.2
(22) Date de dépôt: 21.04.1997
(51) Int. Cl.: B60B 33/02

(54) **Roulette destinée, notamment à des chariots, bacs ou autres**
Laufrolle, insbesondere für Wagen, Behälter oder gleichartiges
Castor, in particular for carts, containers or similar

(30) Priorité: 22.04.1996 FR 9605339
(43) Date de publication de la demande: 29.10.1997
(73) Titulaire: Société d'Exploitation de la Manufacture Parisienne de Roulettes "M.P.R."Société Anonyme, 95400 Arnouville les Gonesse (FR)
(72) Inventeur: Lesage, Olivier c/o Société d'Exploitation M.P.R., 95400 Arnouville les Gonesse (FR)
(74) Mandataire: Duthoit, Michel

(56) Documents cités:
- EP-A- 0 259 131
- EP-A- 0 562 923
- DE-A- 1 813 442
- DE-A- 3 533 207
- DE-U- 9 413 781
- FR-A- 2 253 639

## Description

La présente invention concerne une roulette destinée, notamment à des chariots, bacs ou autres.

Bien que plus particulièrement prévue pour de telles applications, elle pourra également être utilisée dans tous les domaines de l'activité économique dans lesquels on souhaite disposer de matériel roulant.

Les roulettes actuellement connues sont généralement constituées d'une roue montée libre en rotation dans une monture, cette dernière étant elle-même apte à pivoter autour d'un axe prévu dans le plan de roue au niveau d'une platine permettant la fixation de ladite roulette sur le matériel auquel elle est destinée.

Dans certains des cas, correspondant, notamment, aux dispositifs décrits dans les documents DE-U-94 13 781 (qui représente l'état de la technique selon le préambule de la revendication 1) et EP-A-0 259 131, ces roulettes sont munies de moyens de freinage constitués par une lame, prévue entre la roue et la platine permettant de bloquer simultanément la rotation de la roue et le pivotement de la monture, empêchant ainsi tout déplacement desdites roulettes.

Toutefois, de tels moyens connus ne permettent pas d'effectuer uniquement un blocage directionnel, c'est-à-dire, de bloquer seulement le pivotement de la monture, dans une direction privilégiée, sans bloquer la rotation de la roue.

Pour cela, il faut utiliser une lame de freinage de structure différente et un dispositif de blocage directionnel dissocié rajouté sur la platine et coopérant avec la monture, indépendamment de la lame, ledit dispositif et ladite lame étant alors munis de deux pédales d'actionnement différentes.

L'inconvénient de telles roulettes est de présenter à la fois un dédoublement des organes de blocage et de leurs organes d'actionnement. Leur fabrication est ainsi rendue plus complexe et leur coût de revient augmenté.

De plus, il est à noter que le déblocage de la lame et/ou celui du dispositif de blocage directionnel est souvent difficile. En effet, les pédales d'actionnement correspondantes sont faites pour permettre le blocage tandis que rien n'est prévu pour le déblocage. Ainsi, alors que l'ensemble est souvent destiné à être manipulé par le biais d'un utilisateur, ce dernier est généralement amené à avoir recours à un déblocage des roulettes à la main.

Le but de la présente invention est de pallier les inconvénients précités et de proposer une roulette permettant de réaliser un blocage directionnel ou un freinage avec le même organe de blocage.

Un autre but de la présente invention est de proposer une roulette permettant de réaliser un blocage directionnel ou un freinage à partir d'un même organe de commande.

Un autre but de la présente invention est de proposer une roulette dont la fabrication et la manipulation soient facilitées.

D'autres buts et avantages de la présente invention apparaîtront au cours de la description qui va suivre qui n'est donnée qu'à titre indicatif et qui n'a pas pour but de la limiter.

La présente invention concerne une roulette destinée, notamment, à des chariots, bacs ou autres, constituée d'une roue, d'une monture et d'une platine, aptes à permettre, d'une part, la rotation de la roue autour d'un axe lié à la monture et, d'autre part, le pivotement de la monture autour d'un axe défini par la platine, ladite roulette étant munie de moyens de blocage simultané de ladite rotation de la roue ainsi que dudit pivotement, appelés moyens de freinage, comprenant une lame commune au blocage du pivotement et au blocage de la rotation de la roue, caractérisée par le fait que ladite roulette est munie de moyens de blocage du seul dit pivotement, appelés moyens de blocage directionnel, comprenant ladite lame, prévue apte à occuper au moins trois positions différentes de manière à pouvoir assurer, alternativement, le libre déplacement ou le blocage directionnel ou le freinage de ladite roulette.

L'invention sera mieux comprise à la lecture de la description suivante accompagnée des dessins en annexe qui en font partie intégrante, parmi lesquels :
- la figure 1 décrit, en perspective, un exemple de roulette conforme à l'invention,
- la figure 2 décrit, en perspective, selon une coupe longitudinale partielle, un premier mode de réalisation de roulette conforme à l'invention,
- la figure 3 décrit, en perspective, un premier exemple de réalisation d'un des éléments d'une roulette telle que représentée à la figure 2,
- la figure 4 décrit, en perspective, un second exemple de réalisation de l'élément représenté à la figure 3,
- les figures 5a à 5c illustrent le principe de fonctionnement de la roulette conforme à l'invention,
- les figures 6, 7 et 8 reprennent respectivement les figures 2, 3 et 4 précédentes avec un autre mode de réalisation de roulette conforme à l'invention.

La présente invention concerne une roulette destinée, notamment, à des chariots, bacs ou autres.

Bien que plus particulièrement prévue pour de telles applications, elle pourra également être utilisée dans tous les domaines de l'activité économique dans lesquels on souhaite disposer de matériel roulant.

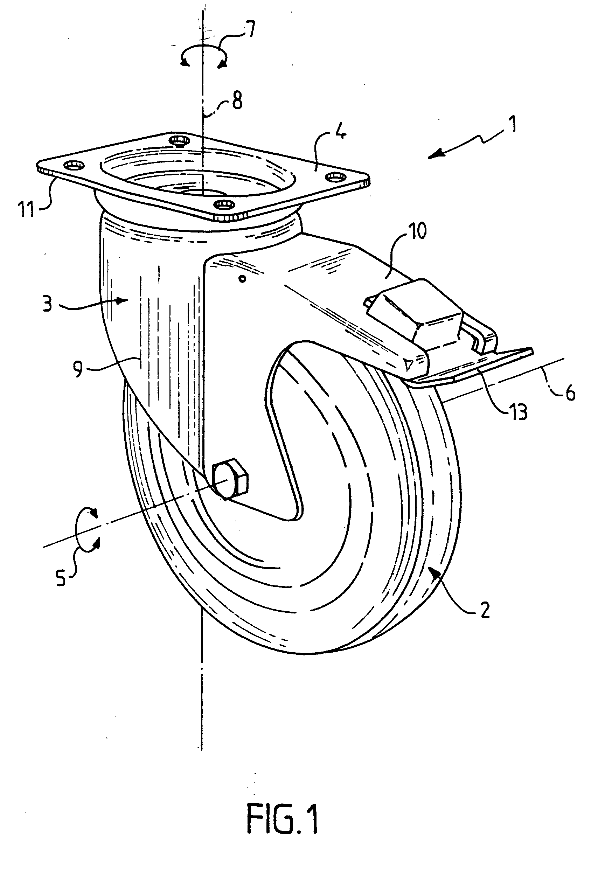

A la figure 1, on constate que la roulette 1 illustrée, conforme à l'invention, est constituée d'une roue 2, d'une monture 3 et d'une platine 4, aptes à permettre d'une part, comme illustré par la flèche repérée 5, la rotation de la roue 2 autour d'un axe 6 lié à la monture 3 et, d'autre part, comme illustré par la flèche repérée 7, le pivotement de ladite monture 3 autour d'un axe 8 défini par la platine 4.

La roue 2 est constituée, par exemple, d'une roue à bandage, connue de l'homme de l'art.

La monture 3 comprend, notamment, deux joues latérales 9 reliées par une chape 10, prévue en vis-à-vis de la bande de roulement de la roue 2, cette dernière étant, par exemple, montée libre en rotation dans ladite monture 3 au niveau d'orifices prévus dans les joues 9.

La platine 4 comprend, notamment, dans sa partie supérieure, une plaque de fixation 11, apte à permettre son montage sur le matériel roulant auquel la roulette 1 est destinée. Elle comprend, en outre, notamment, un pivot 50, par lequel passe ledit axe de pivotement 8, et un élément 23, 123 de fermeture de platine, habituellement désigné « capot ».

Par ailleurs, l'articulation de la monture 3 autour de ladite platine 4 est réalisée, de manière connue de l'homme de l'art, par exemple, par l'intermédiaire de roulement à billes.

Afin de pouvoir assurer son déplacement suivant une direction privilégiée, ladite roulette 1 est munie de moyens de blocage du seul pivotement 7, appelés moyens de blocage directionnel. De plus, afin de pouvoir assurer son immobilisation complète, elle est également munie de moyens de blocage simultané de la rotation 5 de la roue 2 ainsi que dudit pivotement 7, appelés moyens de freinage.

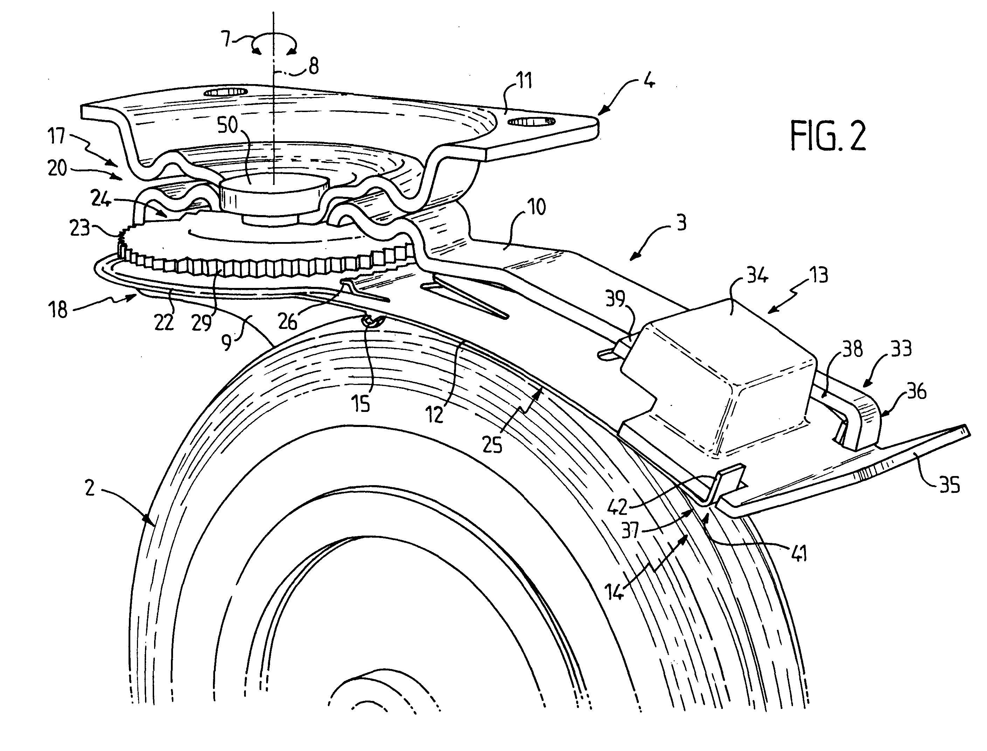

Si l'on se reporte maintenant à la figure 2, on constate que, selon l'invention, ladite roulette 1 comprend une lame 12, articulée et flexible, commune auxdits moyens de blocage directionnel et auxdits moyens de freinage, apte à occuper au moins trois positions différentes de manière à pouvoir assurer, alternativement, le libre déplacement ou le blocage directionnel ou le freinage de ladite roulette 1.

La lame 12 est prévue, par exemple, entre d'une part, la roue 2 et, d'autre part, la chape 10 de la monture 3 et la platine 4. En fonction de ces différentes positions, ladite lame 12 est plus ou moins fléchie, comme développée plus loin, par rapport à la roue 2. On peut toutefois considérer que ladite lame 12 se trouve, notamment, sensiblement dans un plan, parallèle à la bande de roulement de ladite roue 2. De plus, l'axe longitudinal de ladite lame 12 est orienté, par exemple, selon la direction donnée par ladite roue 2.

La roulette 1 comprend également, par exemple, des moyens de commande 13 du positionnement de ladite lame 12, coopérant avec cette dernière au niveau d'une première zone 14 de manière à pouvoir entraîner ladite lame 12 au moins dans un mouvement de rotation.

Selon le mode de réalisation illustré, ladite première zone 14 est prévue à l'une des extrémités de la lame 12.

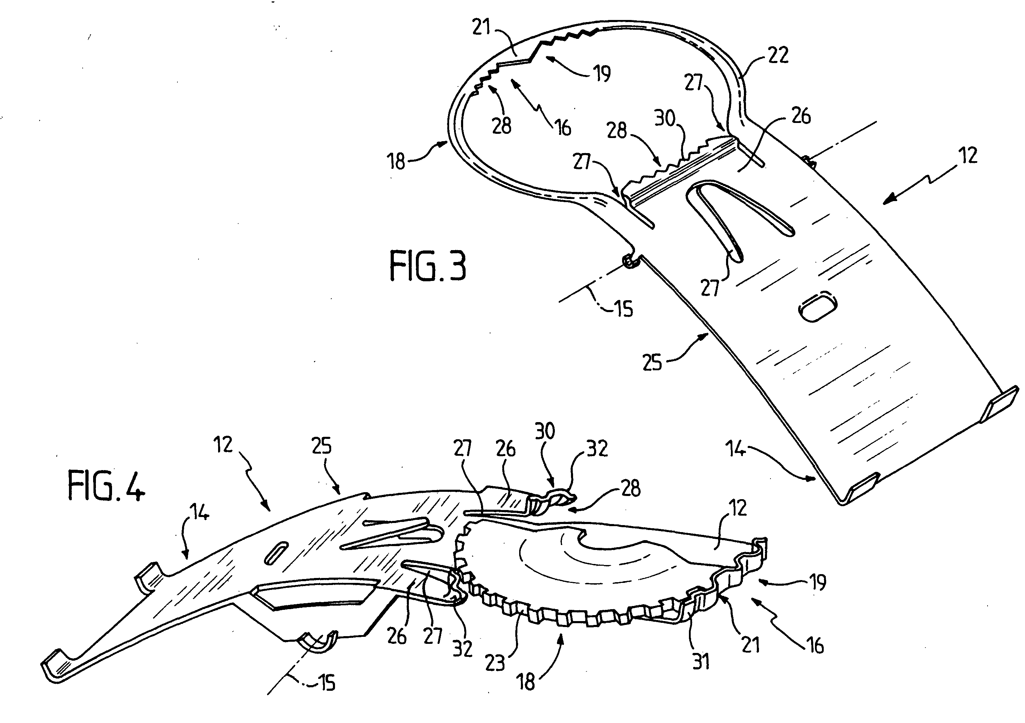

Si l'on se reporte maintenant également aux figures 3 et 4, on constate que la lame 12 présente, notamment, un axe d'articulation 15, prévu dans une zone médiane, ledit axe d'articulation 15 étant assujetti à ladite monture 3. Par zone médiane, on entend zone située entre les deux extrémités de la lame 12. Ledit axe d'articulation 15 est prévu, par exemple, légèrement en-dessous du plan de ladite lame (12), dans sa zone centrale.

Les moyens de blocage directionnel sont ainsi constitués, par exemple, par un premier 16 et un second 17 éléments, ledit premier élément 16 étant prévu au niveau de ladite lame 12 dans une deuxième zone 18, ladite première zone 14 et ladite seconde zones 18 étant situées de part et d'autre dudit axe d'articulation 15, ledit premier élément 16 coopérant, par un mouvement de rotation de la lame 12, avec ledit second élément 17, prévu au niveau de la platine 4.

Selon les exemples de réalisation représentés, ledit premier élément 16 est situé à l'extrémité de la lame 12 opposée à celle coopérant avec les moyens de commande 13.

Ladite lame 12 présente ainsi, par exemple, directement ou indirectement, une saillie 19, constituant ledit premier élément 16, et la platine 4 présente, par exemple, directement ou indirectement, un logement 20, constituant ledit second élément 17, ladite saillie 19 étant apte à venir se placer dans ledit logement 20 pour bloquer le pivotement 7 de la monture 3.

De manière à pouvoir assurer un déplacement en ligne droite d'un matériel roulant muni de roulettes 1 conforme à l'invention, ladite saillie 19 est prévue, de préférence, au niveau de l'axe longitudinal de la lame 12.

Si l'on s'intéresse maintenant plus précisément au mode de réalisation de ladite lame 12 représenté à la figure 3, on constate que ladite saillie 19 est constituée par une dent 21 prévue sur une bague 22, formée par ladite lame 12 dans ladite seconde zone 18.

De plus, ladite bague 22 est prévue au niveau de la circonférence d'un capot 23, relié à la platine 4 par l'intermédiaire du pivot 50, ledit capot 23 présentant une encoche 24, constituant ledit logement 20, ladite dent 21 et ladite encoche 24 coopérant, notamment, par encastrement, de manière à bloquer la roulette dans une direction privilégiée.

Les moyens de freinage, quant à eux, sont constitués, par exemple, d'une part, pour assurer le blocage de la rotation 5 de la roue 2, par ladite lame 12, prévue élastiquement déformable, apte à venir, grâce à un mouvement de rotation supplémentaire, en appui par flexion contre la bande de roulement de ladite roue 2, dans une troisième zone 25, comprise entre ladite première zone 14 et ledit axe d'articulation 15.

Le blocage du pivotement 7 est alors réalisé, par exemple, par au moins une languette 26, formée par des découpes partielles 27 prévues dans la lame 12 entre ladite deuxième zone 18 et ladite troisième zone 25. En effet, dans cette position, ladite deuxième zone 18 étant en appui contre le capot 23, ladite languette 26 est apte, sous l'effet de la flexion de la lame 12, à se défléchir par rapport à cette dernière pour venir coopérer avec ledit capot 23.

De manière à assurer le blocage, ladite languette 26 présente, notamment, au moins une excroissance 28, apte à coopérer avec une multitude d'évidements 29 répartis circonférentiellement au niveau du capot 23.

Selon le mode de réalisation de la lame 12 représenté à la figure 3, ladite languette 12 présente une extrémité crantée 30, prévue au niveau de la circonférence de ladite bague 22, apte à coopérer par engrenage avec ledit capot 23, également prévue crantée sur sa périphérie.

Selon le mode de réalisation représenté à la figure 4, ladite lame 12 est munie de deux languettes 26 latérales présentant chacune un retour cranté 32. De plus, dans ce cas, on constate que l'extrémité de la lame 12 formant la seconde zone 18 est munie d'un retour 31, également cranté, constituant ainsi ladite saillie 19 et lesdites excroissances 28, le cran de la saillie 19 étant plus profond que ceux des excroissances 28.

On peut également remarquer que la lame 12 est munie, éventuellement au niveau de la languette 26, d'une découpe en forme de V, prévue au niveau de l'axe longitudinal de la lame et orientée suivant ce dernier, la base dudit V étant tournée vers l'extrémité crantée de ladite languette 26. Ladite découpe en V facilite, notamment, le défléchissement de ladite languette 26.

Si l'on se reporte maintenant de nouveau à la figure 2, on constate que lesdits moyens de commande 13 sont constitués, par exemple, par un seul et même organe 33, apte à permettre le placement de la lame 12 dans lesdites trois positions différentes.

Ledit organe 33 comprend, notamment, un poussoir 34, une pédale 35, reliés entre eux par une zone médiane 36, constituant un axe d'articulation 37 par rapport à la lame 12, apte à entraîner cette dernière dans un mouvement de rotation et/ou flexion.

De plus, la chape 10 présente, par exemple, une fente 38 à son extrémité prévue à l'opposé de la platine 4, apte à permettre le guidage dudit poussoir 34 lors de son actionnement, la pédale 35 étant quant à elle prévue à l'extérieur de ladite chape 10.

Selon le mode de réalisation illustré, le poussoir 34 comprend un épaulement 39, apte à venir en appui, selon la position dudit organe 33, d'un côté ou de l'autre de la chape 10, par basculement au niveau de l'arête 40 formant le fond de ladite fente 38.

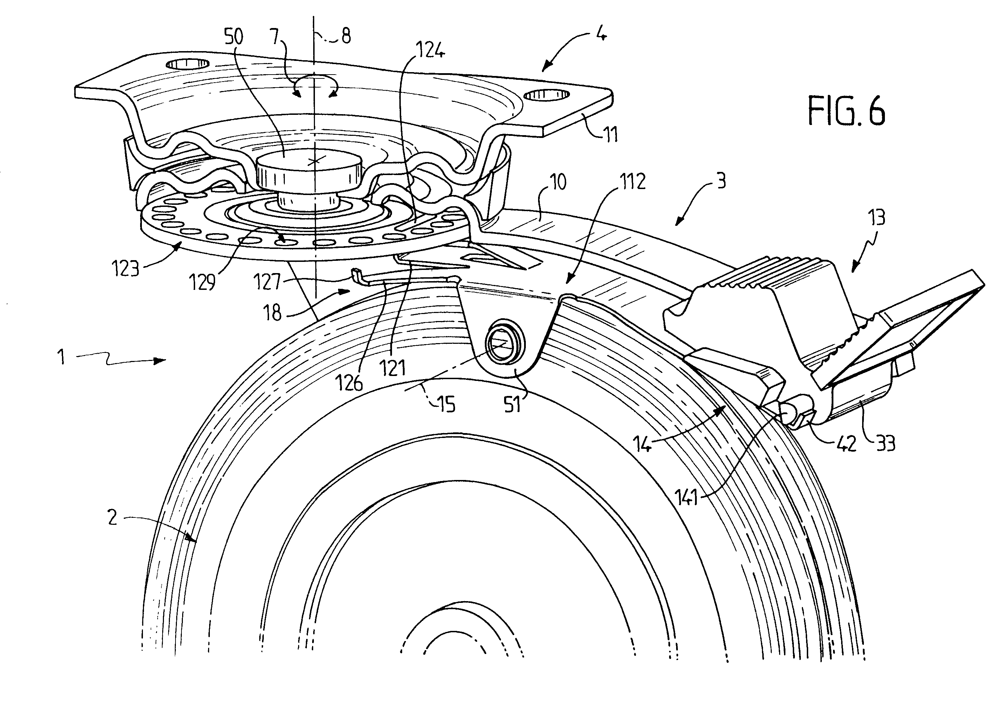

Ladite zone médiane 36 est munie, notamment, de deux fentes 41, prévues transversales audit organe 33, apte à coopérer avec des retours 42, prévus sur ladite lame 12 au niveau de ladite première zone 14, ou, comme illustré à la figure 6, par deux excroissances 141, au niveau desquelles s'effectue l'articulation dudit organe 33.

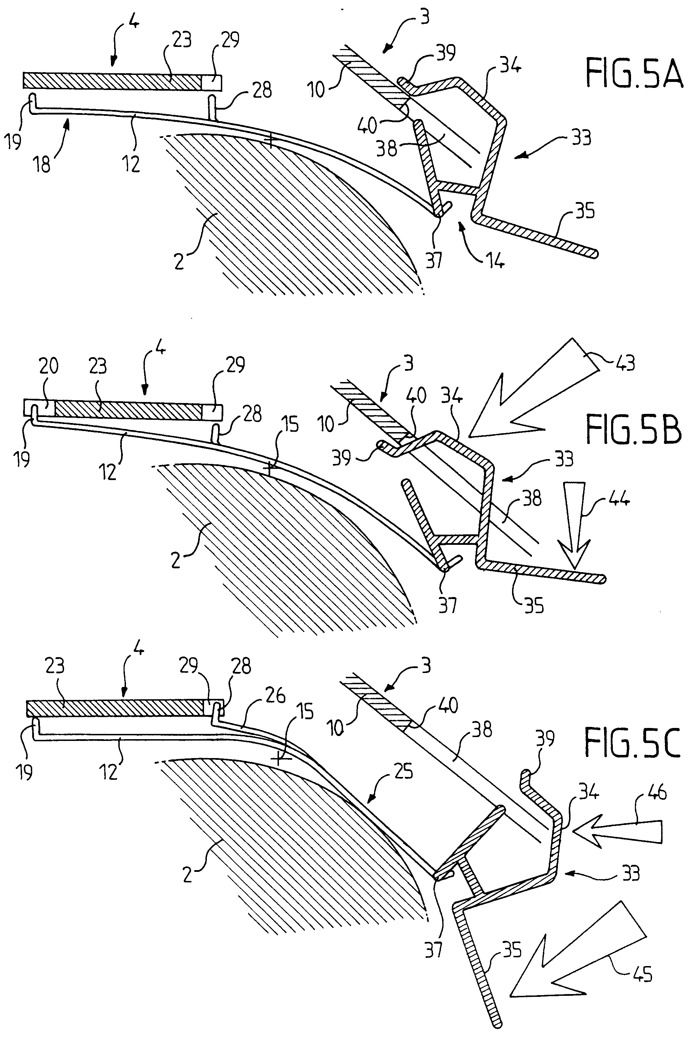

Le fonctionnement de la roulette 1 sera mieux compris grâce aux figures 5a à 5c, qui illustrent schématiquement ces différents éléments, la figure 5a représentant la roulette 1 en position de libre déplacement, la figure 5b représentant la roulette 1 en position de blocage directionnel et la figure 5c représentant la roulette 1 en position de freinage.

En position de libre déplacement, on constate ainsi que l'épaulement 39 est en appui sur la face supérieure de la chape 10. Pour passer en position de blocage directionnel, il suffit d'exercer une pression sur le poussoir 34, comme illustré par la flèche repérée 43. L'organe de commande 33 étant libre dans la fente 38, l'épaulement 39 s'escamote alors autour de l'arête 40 et se retrouve en appui sous la face inférieure de la chape 10, notamment grâce à la coopération de la lame 12 flexible.

La lame 12 a alors subi une rotation suffisante pour que la saillie 19 coopère avec le logement 20, ladite rotation restant toutefois assez limitée de manière à éviter le contact de ladite lame 12 et de la roue 2. En outre, si la saillie 19 et le logement 20 ne sont pas en vis-à-vis, ceux-ci se placeront dès le premier déplacement de la roulette.

Pour le déblocage, on réalise le phénomène inverse grâce à une pression sur la pédale 35, comme représenté par la flèche repérée 44. Grâce à la flexion de l'extrémité de la lame 12, notamment au niveau de l'axe 37, et à l'effet ressort de celle-ci, l'épaulement 39 s'échappe de l'arête 40 et retourne en position supérieure.

Pour passer en position frein, il suffit d'actionner, comme simulé par la flèche repérée 45, la pédale 35, l'organe de commande 33 pivote alors autour de l'axe d'articulation 37 et entraîne la lame 12 dans un mouvement de rotation jusqu'à ce que cette dernière entre en contact avec la roue 2. Une pression supplémentaire sur ladite pédale 35 permet alors d'obtenir la flexion de ladite lame 12 et le défléchissement de la languette 26 assurant le blocage du pivotement 7.

Pour le déblocage, il suffit d'actionner le poussoir 34 selon la flèche repérée 46 et l'organe 33 revient se mettre naturellement dans la position illustrée à la figure 5a.

On constate ainsi que dans chaque cas le déblocage est facilité car il est réalisé par la partie 34, 35 différente de celle par laquelle on a assuré le blocage correspondant.

Il est également à noter que, en position de libre déplacement, grâce à son élasticité, la lame 12 vient éventuellement en appui contre ledit organe 33.

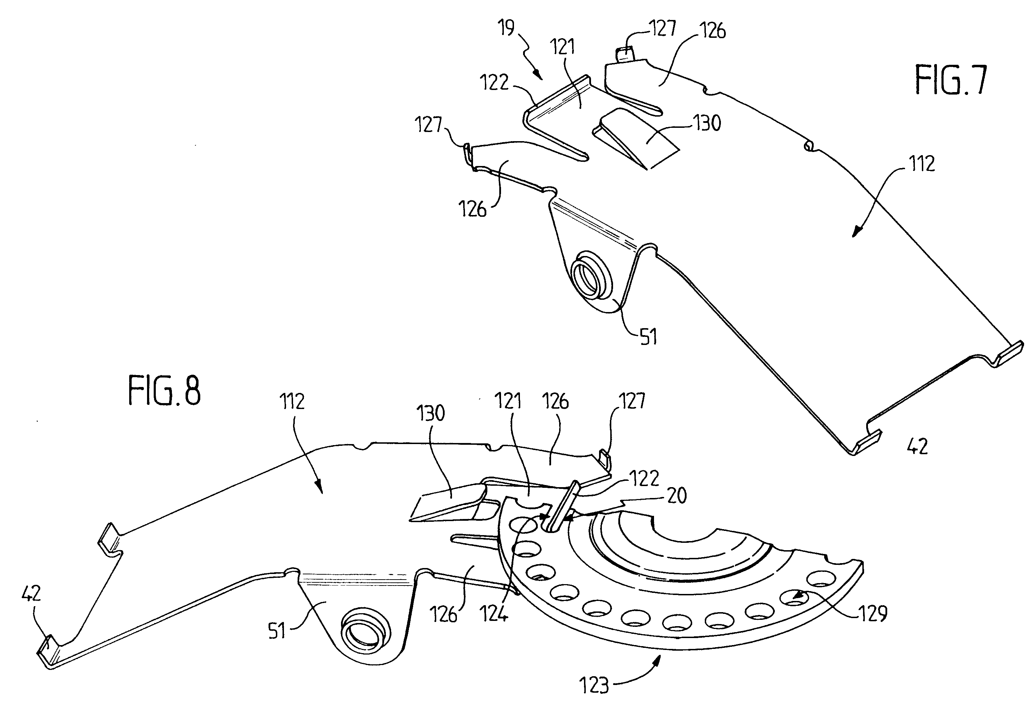

Selon un autre mode de réalisation, illustré aux figures 6, 7 et 8, le blocage directionnel et/ou le freinage peuvent aussi être réalisés, notamment, de la manière suivante.

La lame 112 présente, par exemple, au niveau de ladite deuxième zone 18, une languette 121, légèrement infléchie en direction du capot 123, et à l'extrémité de ladite languette 121, une partie recourbée 122, apte à coopérer par encastrement avec une lumière 124 prévue dans ledit capot 123.

Ladite languette 121 et ladite lumière 124 définissent respectivement ladite saillie 19 et ledit logement 20, précédemment rencontrés, et permettent le blocage directionnel de la roulette 1, c'est-à-dire, autorisent le roulement dans une direction privilégiée tout en empêchant le pivotement autour de l'axe 8.

De plus, ladite lame 112 présente, de part et d'autre, de ladite languette 121 permettant le blocage directionnel, par exemple, une patte 126 terminée chacune d'un cran 127 recourbé vers ledit capot 123 à l'intérieur duquel lesdits crans 127 peuvent être introduits dans des évidements 129 disposés en anneau autour du pivot 50.

Lesdits crans 127 se trouvent, notamment, sensiblement au même niveau que ladite partie recourbée 122 de la languette 121 permettant le blocage directionnel, selon l'axe longitudinal de la lame 112.

Lors d'une flexion de cette dernière contre la roue 2, lesdits crans 127 s'encastrent dans lesdits évidements 129 et assurent le blocage en pivotement, et ceci quelle que soit l'orientation de ladite roue 2. On obtient ainsi la situation de freinage.

Comparé au mode de réalisation illustré à la figure 3, on constate que, dans ce cas, la languette centrale 121 intervient lors du blocage directionnel et non, comme la languette 26, lors du freinage.

Si l'on se reporte de nouveau aux figures 6 à 8, on constate que l'axe d'articulation 15 est défini, par exemple, au niveau de deux ailes 51, prévues de part et d'autre de ladite lame 112 et orientées orthogonalement en direction de la roue 2 par rapport à ladite lame 112.

Par ailleurs, un organe de rappel 130 pourra, éventuellement, être prévu sur ladite lame 112 à la base de ladite languette 121 permettant le blocage directionnel. Ledit organe de rappel 130 est formé par découpage partiel de ladite lame 112 et facilite, comme celui obtenu par la découpe en V précédemment rencontré dans les autres modes de réalisation illustrés, le passage de ladite lame 112 d'une de ses positions à une autre.

Naturellement, d'autres mises en oeuvre de la présente invention, à la portée de l'homme de l'art, auraient pu être envisagées sans pour autant sortir du cadre de la présente demande.

## Revendications

1. Roulette (1) destinée, notamment, à des chariots, bacs ou autres, constituée d'une roue (2), d'une monture (3) et d'une platine (4), aptes à permettre, d'une part, la rotation de la roue (2) autour d'un axe (6) lié à la monture (3) et, d'autre part, le pivotement de ladite monture (3) autour d'un axe (8) défini par la platine (4), ladite roulette (1) étant munie de moyens de blocage simultané de ladite rotation de la roue (2) ainsi que dudit pivotement, appelés moyens de freinage, comprenant une lame (12, 112) commune au blocage du pivotement et au blocage de la rotation de la roue (2), caractérisée par le fait que ladite roulette (1) est munie de moyens de blocage du seul dit pivotement, appelés moyens de blocage directionnel, comprenant ladite lame, prévue apte à occuper au moins trois positions différentes de manière à pouvoir assurer, alternativement, le libre déplacement ou le blocage directionnel ou le freinage de ladite roulette (1).

2. Roulette selon la revendication 1, comprenant des moyens de commande (13) de positionnement de ladite lame (12 ; 112) coopérant avec cette dernière au niveau d'une première zone (14) de manière à pouvoir entraîner ladite lame (12 ; 112) au moins dans un mouvement de rotation.

3. Roulette selon la revendication 2, dans laquelle ladite première zone (14) est prévue à l'une des extrémités de la lame (12 ; 112).

4. Roulette selon la revendication 2, dans laquelle ladite lame (12 ; 112) présente un axe d'articulation (15), prévu dans une zone médiane, assujettie à ladite monture (3).

5. Roulette selon la revendication 4, dans laquelle lesdits moyens de blocage directionnel sont constitués par un premier (16) et un second (17) éléments, ledit premier élément (16) étant prévu au niveau de ladite lame (12 ; 112) dans une deuxième zone (18), ladite première zone (14) et ladite seconde zone (18) étant situées de part et d'autre dudit axe d'articulation (15), ledit premier élément (16) coopérant, par un mouvement de rotation de la lame (12 ; 112) avec ledit second élément (17) prévu au niveau deladite platine (4).

6. Roulette selon la revendication 5, dans laquelle ladite lame (12 ; 112) présente, directement ou indirectement, une saillie (19), constituant ledit premier élément (16), et la platine (4) présente, directement ou indirectement, un logement (20) constituant ledit second élément (17), ladite saillie (19) étant apte à venir se placer dans ledit logement (20) pour bloquer ledit pivotement de la monture (3).

7. Roulette selon la revendication 6, dans laquelle ladite saillie (19) est constituée par une dent (21) prévue sur une bague (22), formée par ladite lame (12) dans ladite seconde zone (18), ladite bague (22) étant prévue au niveau de la circonférence d'un capot (23), prévu sur ladite platine (4), ledit capot (23) présentant une encoche (24) constituant ledit logement (20), ladite dent (21) et ladite encoche (24) coopérant par encastrement, de manière à bloquer la roulette dans une direction privilégiée.

8. Roulette selon la revendication 7, dans laquelle les moyens de freinage sont constitués, d'une part, pour assurer le blocage de la rotation de la roue (2), par ladite lame (12) prévue élastiquement déformable, apte à venir, grâce à un mouvement de rotation supplémentaire, en appui par flexion contre ladite roue (2) dans une troisième zone (25) comprise entre ladite première zone (14) et ledit axe d'articulation (15) et, d'autre part, pour assurer le blocage du pivotement, par au moins une languette (26) formée par des découpes partielles (27) prévues dans la lame (12), entre ladite deuxième zone (18), prévue en appui contre le capot (23), et ladite troisième zone (25), ladite languette (26) étant apte, sous l'effet de la flexion de ladite lame (12), à se défléchir par rapport à cette dernière pour venir coopérer avec ledit capot (23).

9. Roulette selon la revendication 8, dans laquelle ladite languette (26) présente au moins une excroissance (28), apte à coopérer avec une multitude d'évidements (29) répartis circonférentiellement au niveau du capot (23).

10. Roulette selon la revendication 8, dans laquelle ladite languette (26) présente une extrémité crantée (30), prévue au niveau de la circonférence de ladite bague (22), apte à coopérer par engrenage avec ledit capot (23), également prévue crantée sur sa périphérie.

11. Roulette selon la revendication 2, dans laquelle lesdits moyens (13) sont constitués par un organe (33), apte à permettre le placement de la lame (12 ; 112) dans lesdites trois positions différentes.

12. Roulette selon la revendication 11, dans laquelle ledit organe (33) est constitué d'un poussoir (34) et d'une pédale (35) reliés entre eux par une zone médiane (36), constituant un axe d'articulation (37) par rapport à la lame (12 ; 112), apte à entraîner cette dernière dans un mouvement de rotation et/ou flexion.

13. Roulette selon la revendication 12, dans laquelle ladite monture (3) est munie d'une chape (10) dont l'extrémité prévue à l'opposé de la platine (4) présente une fente (38), apte à permettre le guidage dudit poussoir (34) lors de son actionnement.

14. Roulette selon la revendication 13, dans laquelle ledit poussoir (34) comprend un épaulement (39), apte à venir en appui, selon la position dudit organe (33), d'un côté ou de l'autre de la chape (10), par basculement au niveau de l'arête (40) formant le fond de ladite fente (38).

15. Roulette selon la revendication 12, dans laquelle ladite zone médiane (36) est munie de deux fentes (41), prévues transversales audit organe (33), apte à coopérer avec des retours (42), prévus sur ladite lame (12) au niveau de ladite première zone (14).

## Patentansprüche

1. Rolle (1), nämlich für Rollwagen, Behälter oder dergleichen, bestehend aus einem Rad (2), einem Gestell (3) und einer Platte (4), die geeignet sind, einerseits, die Drehung des Rades (2) um eine mit dem Gestell (3) verbundene Achse (6) und, andererseits, die Schwenkung des genannten Gestells (3) um eine von der Platte (4) definierten Achse (8) zu erlauben, wobei die Rolle (1) mit Mitteln zum gleichzeitigen Sperren der genannten Drehung des Rades (2) sowie der genannten Schwenkung umfaßt, die Bremsmittel genannt werden und ein für die Sperrung der Schwenkung und die Sperrung der Drehung des Rades (2) gemeinsames Plättchen (12, 112) umfaßt, dadurch gekennzeichnet, daß die genannte Rolle (1) mit Mitteln zum Sperren der genannten einzigen Schwenkung versehen ist, die Richtungssperrmittel genannt werden und das genannte Plättchen umfassen, das geeignet vorgesehen ist, wenigstens drei unterschiedliche Stellungen einzunehmen, so daß es wechselweise die freie Bewegung oder die Richtungssperrung oder das Bremsen der genannten Rolle (1) sichern kann.

2. Rolle nach Anspruch 1, umfassend Mittel zum Steuern (13) der Positionierung des genannten Plättchens (12 ; 112), die in einem ersten Bereich (14) mit diesem letzten so zusammenwirken, daß sie das genannte Plättchen (12 ; 112) wenigstens gemäß einer Drehbewegung antreiben können.

3. Rolle nach Anspruch 2, bei der der genannte erste Bereich (14) an einem Ende des Plättchens (12 ; 112) vorgesehen ist.

4. Rolle nach Anspruch 2, bei der das genannte Plättchen (12 ; 112) eine in einem Mittelbereich an dem genannten Gestell (3) befestigte Gelenkspindel (15) aufweist.

5. Rolle nach Anspruch 4, bei der die genannten Richtungssperrmittel aus einem ersten (16) und einem zweiten Glied (17) bestehen, wobei das genannte erste Glied (16) im Bereich des genannten Plättchens (12 ; 112) in einem zweiten Bereich (18) vorgesehen ist, sich der genannte erste Bereich (14) und der genannte zweite Bereich (18) beiderseits der genannten Gelenkspindel (15) befinden, das genannte erste Glied (16) über eine Drehbewegung des Plättchens (12 ; 112) mit dem genannten, im Bereich der genannten Platte (4) vorgesehenen zweiten Glied (17) zusammenwirkt.

6. Rolle nach Anspruch 5, bei der das genannte Plättchen (12 ; 112) direkt oder indirekt einen Vorsprung (19) aufweist, der das genannte erste Glied (16) bildet, und die Platte (4) direkt oder indirekt eine Aussparung (20) aufweist, die das genannte zweite Glied (17) bildet, wobei der genannte Vorsprung (19) geeignet ist, in die genannte Aussparung (20) eingeführt zu werden, um die genannte Schwenkung des Gestells (3) zu sperren.

7. Rolle nach Anspruch 6, bei der der genannte Vorsprung (19) aus einem Zahn (21) besteht, der auf einem vom genannten Plättchen (12) im genannten zweiten Bereich (18) gebildeten Ring vorgesehen ist, wobei der genannte Ring (22) im Bereich des Umkreises eines auf der genannten Platte (4) vorgesehenen Deckels (23) vorgesehen ist, der Deckel (23) eine Einkerbung (24) umfaßt, die die genannte Aussparung (20) bildet, der genannte Zahn (21) und die genannte Einkerbung (24) durch Ineinanderfügung miteinander zusammenwirken, so daß die Rolle in eine privilegierte Richtung gesperrt wird.

8. Rolle nach Anspruch 7, bei der die Bremsmittel, einerseits, zum Sichern der Sperrung der Drehung des Rades (2) aus dem genannten Plättchen (12), das elastisch verformbar vorgesehen und geeignet ist, über eine zusätzliche Drehbewegung durch Biegung an das genannte Rad (2) anzulehnen, in einem dritten Bereich (25) zwischen dem genannten ersten Bereich (11) und der genannten Gelenkspindel (15), und, andererseits, zum Sichern der Sperrung der Schwenkung, aus wenigstens einer Zunge (26) bestehen, die durch Teilausschnitte (27) gebildet ist, die im Plättchen (12), zwischen dem genannten, an den Deckel (23) anlehnend vorgesehenen zweiten Bereich (16) und dem genannten dritten Bereich (25) vorgesehen sind, wobei die genannte Zunge (26) geeignet ist, unter der Wirkung der Biegung des genannten Plättchens (12) bezüglich dieses letzten zu biegen, um mit dem genannten Deckel (23) zusammenzuwirken.

9. Rolle nach Anspruch 8, bei der die genannte Zunge (26) wenigstens einen Auswuchs (28) aufweist, der geeignet ist, mit einer Vielfalt von umkreismäßig im Bereich des Deckels (23) verteilten Ausnehmungen (29) zusammenzuwirken.

10. Rolle nach Anspruch 8, bei der die genannte Zunge (26) ein im Bereich des Umkreises des genannten Ringes (22) vorgesehenes wellenförmiges Ende (30) aufweist, das geeignet ist, durch Eingriff mit dem genannten Deckel (23) zusammenzuwirken, der an seinem Umkreis ebenfalls wellenförmig vorgesehen ist.

11. Rolle nach Anspruch 2, bei der die genannten Mittel (13) aus einem Organ (33) bestehen, das geeignet ist, es zu erlauben, das Plättchen (12 ; 112) in die drei unterschiedlichen Stellungen zu bringen.

12. Rolle nach Anspruch 11, bei der das genannte Organ (33) aus einem Drücker (34) und einem Pedal (35) bestehen, die durch einen Mittelbereich (36), der eine Gelenkachse (37) bezüglich des Plättchens (12 ; 112) bildet, die geeignet ist, dieses letzte in Dreh- und/oder Biegebewegung anzutreiben, mit einander verbunden sind.

13. Rolle nach Anspruch 12, bei der das genannte Gestell (3) mit einer Haube (10) versehen ist, deren der Platte (4) gegenüberliegend vorgesehenes Ende einen Schlitz (38) aufweist, der geeignet ist, die Führung des genannten Drückers (34) bei dessen Betätigung zu erlauben.

14. Rolle nach Anspruch 13, bei der der genannte Drücker (34) einen Ansatz (39) umfaßt, der geeignet ist, durch Kippung im Bereich der den Boden des genannten Schlitzes (38) bildenden Kante (40) je nach der Stellung des genannten Organs (33) an die eine oder an die andere Seite der Haube (10) anzulehnen.

15. Rolle nach Anspruch 12, bei der der genannte Mittelbereich (36) mit zwei quer zum genannten Organ (33) vorgesehenen Schlitzen (41) versehen ist, die geeignet sind, mit auf dem genannten Plättchen (12), im Bereich des genannten ersten Bereichs (14) vorgesehenen, rechtwinklig vorspringenden Teilen (42) zusammenzuwirken.

## Claims

1. Caster wheel (1) intended, in particular, for trolleys, bins or the like, constituted by a wheel (2), a mounting (3) and a plate (4), capable of permitting, on one hand, the rotation of the wheel (2) about an axle (6) connected to the mounting (3) and, on the other hand, the pivoting of said mounting (3) about an axis (8) defined by the plate (4), said caster wheel (1) being provided with locking means for simultaneously preventing said rotation of the wheel (2) and said pivoting, or so-called braking means, including a strip (12; 112) both for preventing the pivoting and for preventing the rotation of the wheel (2), characterised by the fact that said caster wheel (1) is provided with locking means for preventing only said pivoting, or so-called directional locking means, including said strip, designed to be able to occupy at least three different positions so as to be able to ensure, alternatively, the free movement or the directional locking or the braking of said caster wheel (1).

2. Caster wheel according to claim 1, comprising control means (13) for positioning said blade (12; 112) co-operating with the latter in the area of a first zone (14) so as to be able to drive said strip (12; 112) in a rotary movement.

3. Caster wheel according to claim 2, in which said first zone (14) is provided at one of the ends of the strip (12; 112).

4. Caster wheel according to claim 2, in which said strip (12; 112) has a hinge pin (15), provided in a median zone, fixed to said mounting (3).

5. Caster wheel according to claim 4, in which said directional locking means are constituted by a first member (16) and a second member (17) member, said first member (16) being provided in the area of said strip (12; 112) in a second zone (18), said first zone (14) and said second zone (18) being located on either side of said hinge pin (15), said first member (16) co-operating, through a rotary movement of the strip (12; 112), with said second member (17) provided in the area of said plate (4).

6. Caster wheel according to claim 5, in which said strip (12; 112) has, directly or indirectly, a projection (19), constituting said first member (16), and the plate (4) has, directly or indirectly, a housing (20) constituting said second member (17), said projection (19) being capable of taking up position in said housing (20) to prevent said pivoting of the mounting (3).

7. Caster wheel according to claim 6, in which said projection (19) is constituted by a tooth (21) provided on a ring (22), formed by said strip (12) in said second zone (18), said ring (22) being provided in the area of the circumference of a cover (23), provided on said plate (4), said cover (23) having a slot (24) constituting said housing (20), said tooth (21) and said slot (24) co-operating by fitting together, in such a way as to lock the caster wheel in a preferred direction.

8. Caster wheel according to claim 7, in which the braking means are constituted, on one hand, to ensure prevention of the rotation of the wheel (2), by said strip (12), designed to be elastically deformable, capable, by means of an additional rotary movement, of coming to bear by flexion against said wheel (2) in a third zone (25) lying between said first zone (14) and said hinge pin (15) and, on the other hand, to ensure prevention of pivoting, by at least a tongue (26) formed by partial cut-out portions (27) provided in the strip (12), between said second zone (18), provided so as to bear against the cover (23), and said third zone (25), said tongue (26) being capable, through the effect of the flexion of said strip (12), of being deflected in relation to the latter to come into co-operation with said cover (23).

9. Caster wheel according to claim 8, in which said tongue (26) has at least one protuberance (28), capable of co-operating with a plurality of recesses (29) distributed circumferencially in the area of the cover (23).

10. Caster wheel according to claim 8, in which said tongue (26) has a serrated end (30), provided in the area of the circumference of said ring (22), capable of co-operating by meshing with said cover (23), also designed to be serrated on its periphery.

11. Caster wheel according to claim 2, in which said means (13) are constituted by a member (33), capable of enabling the strip (12; 112) to be placed in said three different positions.

12. Caster wheel according to claim 11, in which said member (33) is constituted by a pusher (34) and a pedal (35) interconnected by a median zone (36), constituting a pin (37) for hinging in relation to the strip (12; 112), capable of driving the latter in a movement of rotation and/or flexion.

13. Caster wheel according to claim 12, in which said mounting (3) is provided with a yoke (10) whereof the end opposed to that of the plate (4) has a slit (38), capable of enabling said pusher (34) to be guided when it is actuated.

14. Caster wheel according to claim 13, in which said pusher (34) includes a shoulder (39), capable of coming to bear, depending on the position of said member (39), on one side or the other of the yoke (10), by swinging in the area of the edge (40) forming the bottom of said slit (38).

15. Caster wheel according to claim 12, in which said median zone (36) is provided with two slits (41), provided transversely to said member (33), capable of co-operating with return pieces (42), provided on said strip (12) in the area of said first zone (14).
